# EUROPÄISCHE PATENTSCHRIFT

(11) **EP 3 880 980 B1**
(45) Veröffentlichungstag und Bekanntmachung des Hinweises auf die Patenterteilung: **04.01.2023**
(21) Anmeldenummer: 19806110.3
(22) Anmeldetag: 11.11.2019
(51) Int. Cl.: F16H 25/20, B62D 1/181, F16C 27/02, F16C 33/04, F16C 17/04, F16C 17/10, F16C 43/02

(54) **VERSTELLANTRIEB FÜR EINE LENKSÄULE UND LENKSÄULE FÜR EIN KRAFTFAHRZEUG**
ADJUSTMENT DRIVE FOR A STEERING COLUMN AND STEERING COLUMN FOR A MOTOR VEHICLE
SYSTEME DE RÉGLAGE POUR UNE COLONNE DE DIRECTION ET COLONNE DE DIRECTION POUR UN VÉHICULE À MOTEUR

(30) Priorität: 12.11.2018 DE 102018219264
(43) Veröffentlichungstag der Anmeldung: 22.09.2021
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); LAMPERT, Walter, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2019/080808
(87) Internationale Veröffentlichungsnummer: WO 2020/099292

(56) Entgegenhaltungen:
- WO-A2-2004/087483
- DE-A1-102011 001 971
- US-A1- 2002 073 790

## Beschreibung

### Stand der Technik

Die Erfindung betrifft einen Verstellantrieb für eine Lenksäule eines Kraftfahrzeugs, mit einer Antriebseinheit umfassend eine Gewindespindel, die mit einem Lagerabschnitt um ihre Achse drehbar in einem Getriebegehäuse gelagert ist, und die einen Gewindeabschnitt mit einem Spindelgewinde aufweist, an den sich axial ein Schaftabschnitt anschließt, auf dem ein Getrieberad drehfest angeordnet ist, welches mit einem Antriebsrad kämmt, das mit einem Antriebsmotor drehend antreibbar gekuppelt ist. Eine motorisch verstellbare Lenksäule mit mindestens einem derartigen Verstellantrieb ist ebenfalls Gegenstand der Erfindung.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse, drehend antreibbar, wodurch die Gewindespindel und die Spindelmutter je nach Drehrichtung translatorisch aufeinander zu oder voneinander weg bewegt werden können. In einer als Rotationsspindelantrieb bezeichneten Ausführungsform ist die Gewindespindel von der Antriebseinheit, die axial feststehend mit der Stelleinheit oder der Trageinheit verbunden ist, um ihre Achse drehend antreibbar und greift in die Spindelmutter ein, die an der Trageinheit oder alternativ an der Stelleinheit bezüglich Drehung um die Gewindespindelachse feststehend angebracht ist. Axial stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt.

Die Antriebseinheit weist ein Getriebegehäuse auf, welches über Verbindungsmittel mit einem ersten Teil der Lenksäule, beispielsweise der Manteleinheit, verbunden und axial abgestützt ist. Aus dem Getriebegehäuse steht die Gewindespindel mit ihrem Gewindeabschnitt axial vor, der mit dem Spindelgewinde in eine Spindelmutter eingeschraubt ist, die axial abgestützt, relativ zur Drehung um die Achse fest an einem zweiten, durch den Verstellantrieb relativ zum ersten Teil verstellbaren zweiten Teil der Lenksäule angebracht ist, beispielsweise an der Trageinheit oder der Stelleinheit.

Die Gewindespindel weist einen Schaftabschnitt auf, der in axialer Richtung mit dem Gewindeabschnitt verbunden ist. Innerhalb des Getriebegehäuses ist auf dem Schaftabschnitt ein Getrieberad drehfest angebracht, welches einen Verzahnungsabschnitt aufweist, beispielsweise eine außen umlaufende Verzahnung oder Schneckenverzahnung. Ein in den Verzahnungsabschnitt eingreifendes Antriebsrad, beispielsweise eine Schnecke, ist direkt oder mittelbar mit der Motorwelle eines elektrischen Motors gekuppelt, der zur Bildung einer kompakten Antriebseinheit mit dem Getriebegehäuse verbunden sein kann. Eine derartige Antriebseinheit ist beispielsweise in der DE 10 2017 201 379 A1 beschrieben.

Zur Aufnahme der auf den Spindeltrieb wirkenden Axial- und Querkräfte ist die Gewindespindel in dem Getriebegehäuse in einer Spindellagerung drehbar gelagert. Die Spindellagerung umfasst mindestens eine Lagerfläche in einem Lagerabschnitt der Gewindespindel, und zumindest eine damit korrespondierende Lagerfläche des Getriebegehäuses.

In der DE 10 2017 201 379 A1 umfasst die Spindellagerung Wälzlager, bei denen die Lagerflächen als Wälzkörperlaufbahnen im Bereich des Schaftabschnitts außen an dem Getrieberad, und damit korrespondierend innen im Getriebegehäuse ausgebildet sind. Der Vorteil ist, dass durch die Wälzlagerung hohe Kräfte problemlos aufgenommen werden können. Der Aufbau ist jedoch relativ aufwendig, und insbesondere bei hohen Verstellgeschwindigkeiten kann erhöhte Reibung auftreten.

In der DE 101 39 051 A1 ist die Gewindespindel in einem Gleitlager in dem Getriebegehäuse gelagert. Zur Aufnahme von Axialkräften ist ein zusätzliches, mit dem Getrieberad zusammenwirkendes Abstützelement vorgesehen. Dadurch ergibt sich ebenfalls ein aufwendiger Aufbau, und es kann erhöhte Reibung auftreten.

In der DE 10 2011 001971 A1 oder der US 2002/073790 A1 sind Verstellantriebe beschrieben, bei denen ein Lagerabschnitt im Bereich eines Schaftabschnitts zwischen einem Getrieberad und einem Gewindeabschnitt angeordnet ist. Nachteilig ist dabei der aufwendige Aufbau und die relativ hohe Reibung. DE 10 2011 001971 A1 offenbart einen Verstellantrieb gemäß dem Oberbegriff des Anspruchs 1.

Angesichts der vorangehend erläuterten Problematik ist es eine Aufgabe der vorliegenden Erfindung, einen verbesserten Verstellantrieb anzugeben, der weniger aufwendig aufgebaut sein kann und eine geringere Reibung ermöglicht.

### Darstellung der Erfindung

Diese Aufgabe wird erfindungsgemäß gelöst durch einen Verstellantrieb mit den Merkmalen des Anspruchs 1 und eine Lenksäule gemäß Anspruch 11. Vorteilhafte Weiterbildungen ergeben sich aus den Unteransprüchen.

Bei einem Verstellantrieb für eine Lenksäule, mit einer Antriebseinheit umfassend eine Gewindespindel, die mit einem Lagerabschnitt um ihre Achse drehbar in einem Getriebegehäuse gelagert ist, und die einen Gewindeabschnitt mit einem Spindelgewinde aufweist, an den sich axial ein Schaftabschnitt anschließt, auf dem ein Getrieberad drehfest angeordnet ist, welches mit einem Antriebsrad kämmt, das mit einem Motor drehend antreibbar gekuppelt ist, wird erfindungsgemäß vorgeschlagen, dass der Schaftabschnitt zwischen dem Gewindeabschnitt und dem Getrieberad eine umlaufende Lagernut mit einem sich zwischen ihren Nutflanken erstreckenden Nutgrund aufweist, wobei die Lagernut in dem Schaftabschnitt zwischen dem Gewindeabschnitt und dem Getrieberad eingebracht ist und die Nutbreite in axialer Richtung zwischen den Nutflanken gemessen kleiner ist als der axiale Abstand zwischen dem Gewindeabschnitt und dem Getrieberad, wobei in der Lagernut im Bereich des Nutgrunds der Lagerabschnitt ausgebildet ist, der in einer Lageröffnung einer in die Lagernut radial eingreifenden Lagerplatte gleitend gelagert ist.

Die erfindungsgemäße Lagernut bildet eine umlaufende Vertiefung in dem Schaftabschnitt. Der Lagerabschnitt weist bevorzugt eine zylindrische Lagerfläche auf, welche ausgebildet ist an der umlaufenden Grundfläche der Lagernut, welche der Nutgrund-Mantelfläche entspricht. Somit erstreckt sich der Nutgrund in axialer Richtung, sprich in Richtung der Achse. Die Achse kann auch als Spindelachse oder Gewindespindelachse bezeichnet werden. Der zylindrische Lagerabschnitt erstreckt sich axial zwischen den beiden Nutflanken, welche den offenen Nutquerschnitt axial begrenzen, und deren axialer Abstand voneinander die Nutbreite der Lagernut definiert. Die Nuttiefe bezeichnet den radialen Abstand zwischen dem Außenumfang des Schaftabschnitts und der am Nutgrund ausgebildeten Lagerfläche.

Bevorzugt ist die erfindungsgemäße Lagernut in den Schaftabschnitt einstückig eingeformt. Dabei bilden beide Nutflanken und der Nutgrund Oberflächen desselben einstückigen Schaftabschnitts. Die Lagernut kann mit geringem Aufwand mittels spanender oder nichtspanender Bearbeitungsverfahren in den Schaftabschnitt eingebracht werden, beispielsweise in einem axial einstückig durchgehenden, bevorzugt zylindrischen Abschnitt des Schaftabschnitts. Ein Vorteil der einstückigen Ausbildung ist, dass keine zusätzlichen Lagerteile - wie bei mehrteiligen Lageranordnungen - zur Begrenzung der Lagernut erforderlich sind. Dadurch wird der Aufwand zur Fertigung und Montage reduziert.

In einer alternativen Ausführungsform kann der Nutgrund konisch ausgebildet sein. Somit ist der Lagerabschnitt eine konusförmige Mantelfläche.

Ein Vorteil ergibt sich daraus, dass der wirksame Lagerdurchmesser des Gleitlagers, der dem Durchmesser des zylindrischen Lagerabschnitts im Inneren der Lagernut am Nutgrund entspricht, kleiner ist als der Außendurchmesser des Schaftabschnitts, in den erfindungsgemäß die Lagernut eingebracht ist. Die durch den in der Lagerbohrung der Lagerplatte gleitgelagerten Lagerabschnitt gebildete Spindellagerung hat durch den geringeren Lagerdurchmesser der Lagerfläche eine geringere Lagerreibung als bei den im Stand der Technik bekannten Verstellantrieben. Beispielsweise ist die Gewindespindel in der oben genannten DE 10 2017 201 379 A1 mit einer außen auf den Schaftabschnitt angeordneten Lagerfläche gelagert, was zu einer höheren Lagerreibung als bei der Erfindung führt.

Ein weiterer Vorteil der Erfindung ergibt sich daraus, dass die Lagerplatte in radialer Richtung zwischen die Nutflanken in den offenen Nutquerschnitt eingreift, und dadurch einen in axialer Richtung wirksamen Formschluss zwischen Lagerplatte und Gewindespindel erzeugt. Mit anderen Worten ist die Gewindespindel in Richtung der Achse formschlüssig relativ zur Lagerplatte positioniert und fixiert. Zwischen der Lagerplatte und den Nutflanken besteht dabei bevorzugt ein axiales Spiel, welches bevorzugt kleiner ist als die Nutbreite oder die Dicke der Lagerplatte.

Die Lagerplatte ist bevorzugt an dem Getriebegehäuse festgelegt, wodurch die Gewindespindel im Getriebegehäuse radial und axial definiert gehalten ist, und zwar in vorteilhafter Weise in beide Axialrichtungen. Die mögliche axiale Bewegung der Gewindespindel relativ zur Lagerplatte wird begrenzt durch das axiale Spiel der Lagerplatte zwischen den Nutflanken. Dadurch kann auf ein zusätzliches Abstützelement wie in der DE 10 2017 201 379 A1 verzichtet werden.

Der Lagerdurchmesser der zylindrischen Lagerfläche ist um den zweifachen Betrag der Nuttiefe kleiner als der Schaftdurchmesser des Schaftabschnitts. Der Schaftabschnitt kann über seine Länge bevorzugt zylindrisch ausgebildet sein, bevorzugt mit einem über die Schaftlänge gleichbleibenden Schaftdurchmesser.

Eine vorteilhafte Ausführung der Erfindung sieht vor, dass der Lagerdurchmesser des Lagerabschnitts kleiner ist als der Gewindenenndurchmesser des Spindelgewindes, bevorzugt kleiner gleich dem Kerndurchmesser des Spindelgewindes. Der Gewindenenndurchmesser wird definitionsgemäß außen am Spindelgewinde gemessen, der Kerndurchmesser am Grund des oder der Gewindegänge. In jedem Fall kann das Spindelgewinde nicht in axialer Richtung durch die Lagerbohrung hindurch bewegt werden, so dass die Gewindespindel durch die erfindungsgemäße Spindellagerung axial sicher fixiert ist. Dadurch, dass der am Nutgrund gemessene Lagerdurchmesser kleiner gleich dem Kerndurchmesser ist, erfolgt die axiale Stützwirkung im Kernbereich, ohne axiale Belastung des Gewindes.

Bevorzugt ist die Lagerplatte durch die Lageröffnung geteilt. Besonders bevorzugt ist die Lagerplatte in zwei Abschnitt geteilt, wobei die Teilung entlang einer Teilungsebene verläuft, wobei die Teilungsebene mit der Achser zusammenfällt, sprich die Achse in der Ebene liegt. Dadurch wird ein radial geteiltes Gleitlager gebildet, welches mindestens zwei die Lageröffnung segmentweise begrenzende Lagerschalen aufweist, vorzugsweise Halbschalen. Zur Montage des Lagers können die Lagerschalen radial in die Lagernut eingesetzt werden, bis sie in der Teillungsebene des Lagers gegeneinander anliegen und den Lagerabschnitt am Nutgrund in der dadurch umfangsseitig geschlossenen Lagerbohrung gleitend drehbar aufnehmen.

Die axiale Dicke der Lagerplatte im Bereich der Lageröffnung kann der Nutbreite der Lagernut zwischen den Nutflanken abzüglich eines vorgegebenen axialen Lagerspiels entsprechen. Das axiale Lagerspiel ist vorzugsweise kleiner als die Dicke der Lagerplatte, durch welche die maximale axiale Länge des Lagerabschnitts begrenzt ist.

Zwischen dem getriebeseitigen Endbereich der Gewindespindel, der sich an dem freien, dem Gewindeabschnitt abgewandten Ende des Schaftabschnitts befindet, und dem Getriebegehäuse kann bevorzugt ein Axial-Drucklager angeordnet sein. Bevorzugt ist ein derartiges Drucklager zwischen der Stirnseite der Gewindespindel und einer dieser gegenüberliegenden Gegenfläche (Stützwandung) des Getriebegehäuses eingegliedert. Beispielsweise kann eine zentrale Spitzen- oder Punktlagerung realisiert sein durch einen stirnseitig axial konvex von der Gewindespindel vorstehenden Lagerkörper, beispielsweise einer Kugel, die in einer nahezu punktförmigen zentralen Lagerfläche gegen eine bevorzugt plane Gegenfläche in dem Getriebegehäuse anliegt.

Es kann vorgesehen sein, dass eine Vorspannvorrichtung wirkmäßig zwischen der Lagerplatte und dem Getriebegehäuse angeordnet ist, von der die Lagerplatte gegen eine Nutflanke der Lagernut axial vorspannbar ist. Durch die Vorspanneinrichtung wird die Lagerplatte gegen die vom Gewindeabschnitt aus gesehen abgewandte Nutflanke der Lagernut angedrückt, wodurch die Vorspannkraft in axialer Richtung auf die Gewindespindel übertragen wird. Durch die Vorspannung wird axiales Lagerspiel der Lagerplatte in der Lagernut ausgeglichen. Außerdem wird durch die Vorspannkraft das Axial-Drucklager, mit dem die Gewindespindel an getriebeseitigen, dem Gewindeabschnitt abgewandten Ende des Schaftabschnitts gegen das Getriebegehäuse abgestützt und gelagert ist, axial verspannt. Dadurch wird auch dort axiales Lagerspiel ausgeglichen und eine hohe Laufruhe bei geringem Verschleiß ermöglicht.

Die Lagerplatte kann in dem Getriebegehäuse axial schwimmend gelagert sein. Durch die schwimmende Lagerung ist die Lagerplatte in Achsrichtung, also in Richtung der Achse, verschiebbar gehalten, so dass sie von der Vorspannvorrichtung relativ zum Getriebegehäuse gegen die Nutflanke bewegbar ist, um die von der Vorspannvorrichtung ausgeübte Vorspannung auf die Gewindespindel zu übertragen.

Bevorzugt kann vorgesehen sein, dass die Vorspannvorrichtung ein elastisches Spannelement, vorzugsweise ein Federelement, zur Erzeugung der Vorspannung aufweist. Das Spannelement kann beispielsweise eine in axialer Richtung wirksame Druckfeder sein, die sich vorgespannt gegen das Getriebegehäuse abstützt, und die Federkraft als Vorspannkraft auf die Lagerplatte ausübt. Bevorzugt kann die Vorspannvorrichtung ein Federelement zur Bereitstellung der Vorspannkraft umfassen, welches beispielsweise als Wellfeder, Tellerfeder, Spiralfeder oder als einen aus Elastomer gebildeten O-Ring ausgebildet ist.

Es kann vorgesehen sein, dass die Vorspannvorrichtung ein quer zur Achse keilförmig zusammenlaufendes Keilelement aufweist, welches in einer Radialrichtung zwischen die Lagerplatte und einer gegen die Achse geneigten Stützfläche des Getriebegehäuses einbringbar ist. Dadurch, dass das Keilelement radial, d.h. quer zur Achse, in Richtung seiner keilförmig zusammenlaufenden Keilflächen eingeschoben wird, wobei diese sich axial gegen die Stützfläche und die Lagerplatte abstützen, kann die Vorspannkraft auf die Lagerplatte erzeugt werden. Ein Vorteil des auf diese Weise gebildeten Keilgetriebes ist, dass durch den Keilwinkel eine Kraftübersetzung zwischen der radial auf den Keil ausgeübten Betätigungskraft und der daraus über die Keilflächen ausgeübten Vorspannkraft vorgegeben werden kann. Je flacher der Keilwinkel, desto höher ist für eine gegebene radiale Betätigungskraft die resultierende axiale Vorspannkraft. Ein weiterer Vorteil ist, dass ein flaches Keilelement selbsthemmend wirkt, d.h. in der eingestellten Position festgeklemmt ist und sich auch bei einer hohen Vorspannkraft nicht löst, und nicht radial nach außen aus seiner eingestellten radialen Position herausbewegt wird.

Das Keilelement kann dadurch vorgespannt werden, dass durch ein elastisches Element, beispielsweise ein am Getriebegehäuse abgestütztes Federelement, beispielsweise eine Druckfeder, die Federkraft als Betätigungskraft in radialer Richtung auf das Keilelement ausgeübt wird. Durch das Kraftübersetzungsverhältnis aufgrund der Keilwirkung reicht eine relativ kleine Feder aus, um eine hinreichend große Vorspannkraft auf die Lagerplatte zu erzeugen.

Bevorzugt kann vorgesehen sein, dass das Keilelement U-förmig ausgebildet ist und zwei Schenkel aufweist, welche die Gewindespindel umgreifen, d.h. sich beiderseits der Achse erstrecken. Die beiden Schenkel erstrecken sich mit Abstand voneinander von einem Verbindungsteil in der Keilrichtung, in der die Keilflächen zusammenlaufen, wodurch sich eine gabel- oder bügelförmige Gestalt ergibt. Der Schaftabschnitt erstreckt sich zwischen den beiden Schenkeln hindurch, so dass durch die beiden Schenkel auf bezüglich der Achse gegenüberliegenden Seiten die Vorspannkraft auf die Lagerplatte ausgeübt wird. Dadurch wird die Vorspannkraft gleichmäßig eingeleitet und eine Beeinträchtigung der Funktion durch Verkeilen der Lagerplatte aufgrund einseitiger Belastung weitgehend ausgeschlossen.

Zur Erzeugung einer elastischen Vorspannkraft kann ein Federelement radial zwischen dem Getriebegehäuse und dem die Schenkel verbindenden Verbindungsteil angeordnet sein, wodurch auf das Keilelement eine Betätigungskraft in Richtung der Schenkel ausgeübt wird. Die Vorspannvorrichtung kann zwischen dem Gewindeabschnitt und dem Getrieberad angeordnet sein, bevorzugt zwischen dem Gewindeabschnitt und der Lagernut. Dadurch wird eine funktionssichere, kompakte Bauform ermöglicht.

Die Erfindung umfasst weiterhin eine motorisch verstellbare Lenksäule für ein Kraftfahrzeug, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine Antriebseinheit aufweist, umfassend eine Gewindespindel, die mit einem Lagerabschnitt um ihre Achse drehbar in einem Getriebegehäuse gelagert ist, und die einen in eine Spindelmutter eingreifenden Gewindeabschnitt mit einem Spindelgewinde aufweist, an den sich axial ein Schaftabschnitt anschließt, auf dem ein Getrieberad drehfest angeordnet ist, welches mit einem Antriebsrad kämmt, das mit einem Antriebsmotor drehend antreibbar gekuppelt ist, bei welcher der Verstellantrieb ausgebildet ist gemäß zumindest einer der vorangehend erläuterten erfindungsgemäßen Ausgestaltungen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine perspektivische Ansicht einer erfindungsgemäßen Lenksäule,
- Figur 2: einen erfindungsgemäßen Verstellantrieb einer Lenksäule gemäß Figur 1in einer perspektivischen Ansicht,
- Figur 3: einen Längsschnitt in Richtung der Spindelachse durch den Verstellantrieb gemäß Figur 2 ,
- Figur 4: einen Querschnitt A-A quer zur Spindelachse durch den Verstellantrieb gemäß Figur 3,
- Figur 5: den Verstellantrieb gemäß Figuren 2 bis 4 in einer teilweise aufgeschnittenen perspektivischen Ansicht,
- Figur 6: eine Detailansicht der Gewindespindel und der Lagerplatte des Verstellantriebs gemäß Figuren 2 bis 5 in einer perspektivischen Ansicht,
- Figur 7: eine zweite Ausführungsform eines Verstellantriebs in einer Darstelllung wie in Figur 3 in einer vergrößerten Detailansicht,
- Figur 8: eine Schnittansicht B-B des Verstellantriebs gemäß Figur 7 bzw. Figur 9,
- Figur 9: eine dritte Ausführungsform eines Verstellantriebs in einer Darstelllung wie in Figur 7,
- Figur 10: einen Längsschnitt entlang der Spindelachse durch einen Verstellantrieb in einer vierten Ausführungsform ähnlich Figur 3,
- Figur 11: eine Detailansicht der Gewindespindel und der Lagerplatten in einer alternativen Ausführungsform in einer perspektivischen Ansicht.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

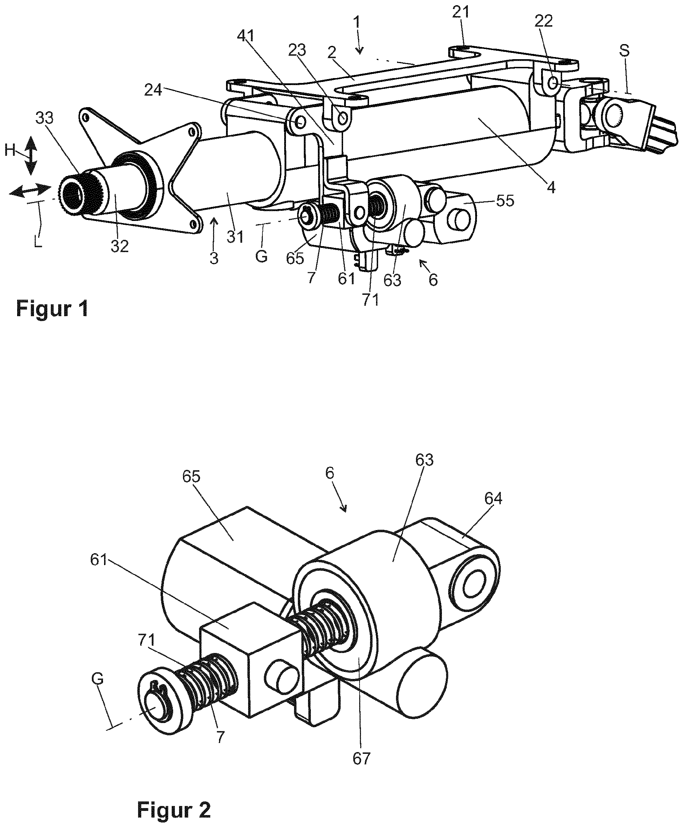

Figur 1 zeigt eine erfindungsgemäße Lenksäule 1 in einer schematischen perspektivischen Ansicht von oben rechts oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines Stellantriebs 6 kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Der Verstellantrieb 6 zur Verstellung in Höhenrichtung H, der in Figur 2 in perspektivischer Ansicht vergrößert freigestellt gezeigt ist, ist erfindungsgemäß ausgebildet und umfasst eine Gewindespindel 7, die um die Achse G, ihre Spindelachse, drehbar in einem Getriebegehäuse 63 gelagert ist. Das Getriebegehäuse 63 weist in seinem getriebeseitigen Endbereich ein Befestigungsmittel 64 zur axial abgestützten Anbringung der Verstellantriebs 6 an der Manteleinheit 4 auf.

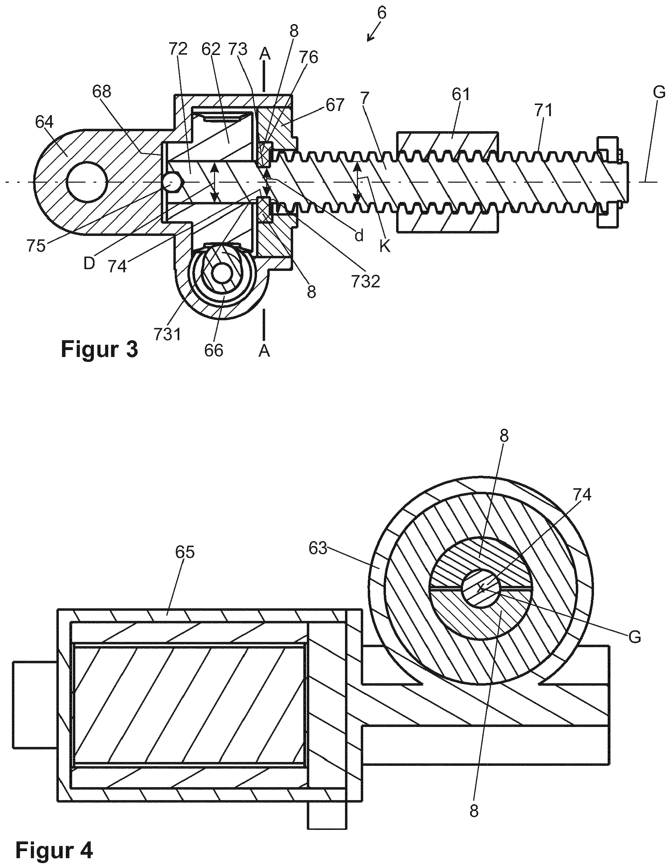

Figur 3 zeigt einen Längsschnitt längs der Achse G. Die Gewindespindel 7 weist einen Gewindeabschnitt 71 auf, der spindelseitig aus dem Getriebegehäuse 63 axial vorsteht. Der Gewindeabschnitt 71 ist in eine Spindelmutter 61 eingeschraubt, die bezüglich einer Drehung um die Achse G feststehend an einem Ende des zweiarmigen Stellhebels 41 angebracht ist, der um ein Schwenklager 23 drehbar an der Trageinheit 2 gelagert ist, und dessen anderer Arm in einem Lager 24 schwenkbar mit dem anderen Ende mit der Manteleinheit 4 verbunden ist.

Getriebeseitig weist die Gewindespindel 7 einen zylindrischen Schaftabschnitt 72 auf. Auf dem Schaftabschnitt 72 ist drehfest ein Getrieberad 62 befestigt, welches als Schneckenrad ausgebildet sein kann und im Kunststoff-Spritzguss an die bevorzugt aus Stahl gefertigte Gewindespindel 7 angespritzt sein kann. Es sind aber auch andere Verbindungstechniken denkbar und möglich, wie beispielsweise eine kraftschlüssige Verbindung.

An dem Getriebegehäuse 63 ist ein elektrischer Motor (Stellmotor) 65 angebracht, auf dessen drehend antreibbarer Motorwelle eine Schnecke 66 befestigt ist, die in die Schneckenverzahnung des Getrieberads 62 eingreift.

Durch Drehung der Gewindespindel 7 kann - je nach Drehrichtung des Motors 65 - die Spindelmutter 61 in Richtung der Achse G translatorisch relativ zur Gewindespindel 7 verlagert werden, so dass entsprechend die über den Stellhebel 41 mit der Spindelmutter 61 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet. Die erfindungsgemäße Lagerung der Gewindespindel 7 wird im Folgenden näher erläutert.

Zwischen dem Gewindeabschnitt 71 und dem Schaftabschnitt 72 weist die Gewindespindel eine Lagernut 73 auf, an deren Nutgrund ein zylindrischer Lagerabschnitt 74 mit einem Lagerdurchmesser d ausgebildet ist, der kleiner ist als der Schaftdurchmesser D des Schaftabschnitts 72, und der bevorzugt ebenfalls kleiner ist als der Kerndurchmesser K des Gewindeabschnitts 71, so dass der Lagerdurchmesser d ebenfalls kleiner als der Gewindenenndurchmesser ist.

Die Lagernut 73 ist bevorzugt wie in der dargestellten Ausführung in den einstückigen Schaftabschnitt 72 einstückig eingeformt, beispielsweise mittels spanender Bearbeitung wie Drehen oder Fräsen, oder alternativ oder zusätzlich mittels nichtspanender Formgebung. Die inneren Nutflanken 731 und 732 und auch der Nutgrund werden durch Oberflächen desselben einstückigen Schaftabschnitts 72 gebildet.

Der Lagerabschnitt 74 ist in einer Lagerbohrung, die auch als Lageröffnung oder Lagerausnehmung bezeichnet werden kann, in einer quer geteilten Lagerwand, die durch zwei jeweils als Halbschalen ausgebildete Lagerschalen 8 gebildet wird, bezüglich Drehung um die Achse G gleitend gelagert. Das auf diese Weise in der Achse G quer geteilte Gleitlager ist in dem in Figur 4 gezeigten Querschnitt A-A aus Figur 3 deutlich erkennbar. Die Trennebene zwischen den Lagerschalen 8 verläuft quer zur Achse G.

Die Begriffe "Lagerschalen" und "Lagerplatten" werden synonym zueinander verwendet und sind somit gleichbedeutend.

Die Lagerschalen 8 ragen radial in die Lagernut 73. Die axiale Dicke der Lagerschalen 8 ist um ein vorgegebenes axiales Spiel kleiner als die Breite der Lagernut 73, gemessen in axialer Richtung innen zwischen deren inneren Nutflanken 731 und 732.

Die Lagerschalen 8 sind in der in Figur 3 gezeigten Ausführung in einem Lagerdeckel 67 aufgenommen und spindelseitig, also vom Getriebegehäuse 63 aus gesehen nach außen, axial abgestützt.

Am getriebeseitigen, dem Gewindeabschnitt 71 abgewandten Ende des Schaftabschnitts 72 ist zentral auf der Achse G eine stirnseitig konvex vorstehende Lagerkugel 75 angebracht, die sich in einem zentralen Lagerbereich nahezu punktförmig gegen eine getriebeseitige axiale Gegenfläche 68 in dem Getriebegehäuse 63 axial abstützt. Dadurch wird ein reibungsarmes Drucklager der Gewindespindel 7 in dem Getriebegehäuse 63 gebildet.

Dadurch, dass der Lagerdeckel 67 mit einem zur Achse G koaxialen Außengewinde in das Getriebegehäuse 3 eingeschraubt werden kann, ist über die Lagerschalen 8 und die getriebeseitige Nutflanke 731 der Lagernut 73 eine axiale Vorspannkraft ausübbar, mit der die Lagerkugel 75 axial gegen die Lagerfläche 68 angedrückt wird. Dadurch kann die aus der Lagerkugel 75 zusammen mit der Gegenfläche 68 und der Lagernut 73 zusammen mit den Lagerschalen 8 gebildete Lageranordnung der Gewindespindel 7 axial spielfrei eingestellt werden. Der Lagerdeckel 67 bildet auf diese Weise eine Vorspannvorrichtung, die wirkmäßig zwischen der aus den Lagerschalen 8 gebildeten Lagerplatte und dem Getriebegehäuse 63 angeordnet ist, von der die Lagerplatte gegen die eine Nutflanke 731 der Lagernut 73 axial vorspannbar ist.

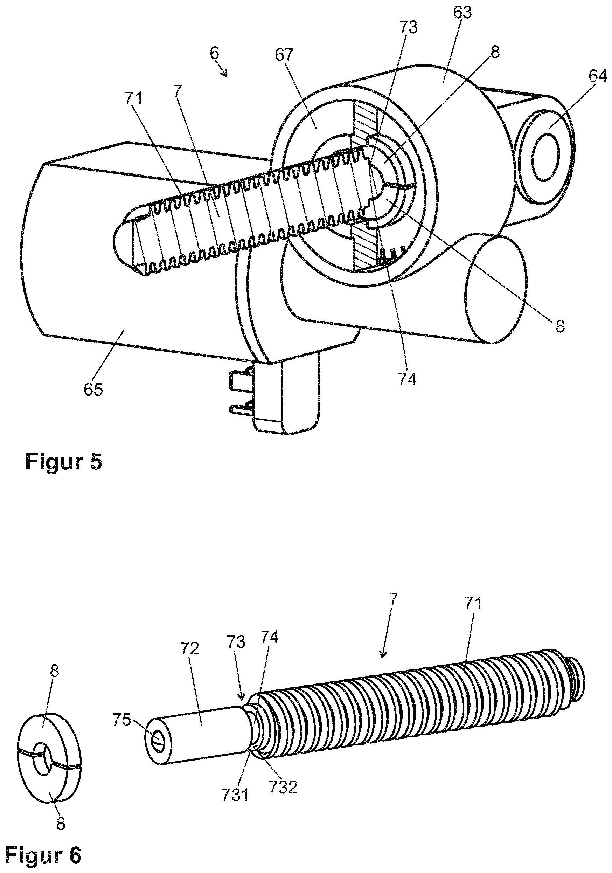

Die Anordnung der Ausführung gemäß Figur 3 ist in dem Teilschnitt von Figur 5 noch einmal perspektivisch veranschaulicht.

Figur 6 zeigt die Gewindespindel 7 und die Lagerschalen 8 in einer separierten, auseinander gezogenen Darstellung, woraus die einzelnen funktionalen Bereiche deutlich hervorgehen.

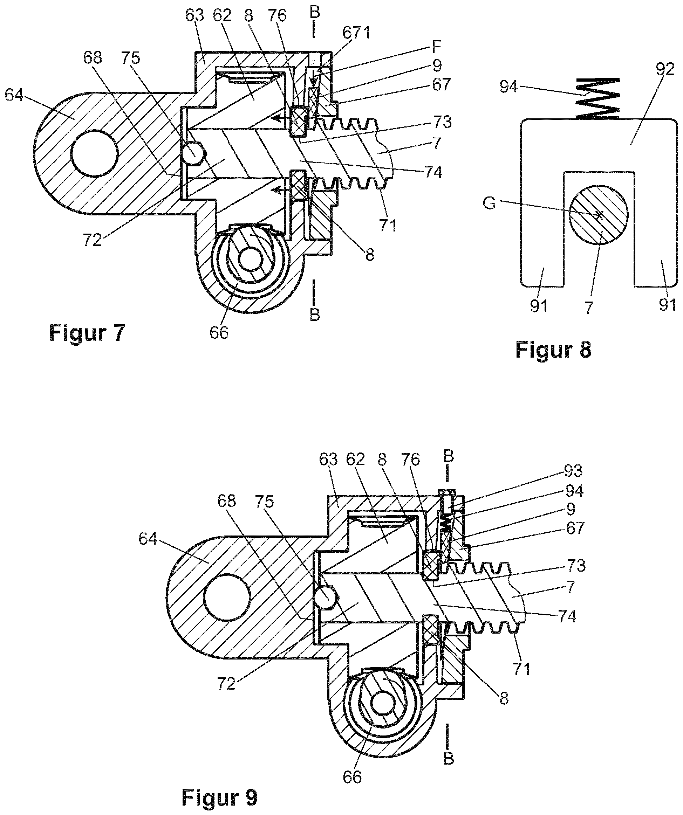

Figuren 7 zeigt eine weitere Ausführungsform einer Antriebseinheit, bei der die aus den beiden Lagerschalen 8 gebildete Lagerplatte in einer Öffnung 76 dem Getriebegehäuse 63 axial schwimmend gelagert ist, d.h. in Richtung auf das Getriebegehäuse 63 zu axial beweglich ist, wie in Figur 7 mit den Pfeilen angedeutet.

Zwischen dem Lagerdeckel 67 und den Lagerschalen 8 ist ein Keilelement 9 eingesetzt, welches in Figur 8 in einer Ansicht in Richtung der Achse G dargestellt ist, wie es in einem Schnitt B-B in dem Getriebegehäuse 63 angeordnet ist. Das Keilelement 9 ist U-förmig aufgebaut, mit zwei Schenkeln 91, die sich mit Abstand voneinander von einem Verbindungsteil 92 erstrecken. Vom Verbindungsteil 92 aus gesehen nimmt die in Richtung der Achse G gemessene Dicke der Schenkel 91 ab, so dass sie - in Figur 7 und 9 von oben nach unten - keilförmig zusammenlaufen. Wie in Figur 8 erkennbar umgreift das gabel- oder bügelförmige Keilelement 9 mit seinen Schenkeln 91 die Gewindespindel 7.

Innen im Bereich des Lagerdeckels 67 weist das Getriebegehäuse 63 eine Keilfläche 671 auf, welche gegen die Achse G in etwa mit dem Keilwinkel des Keilelements 9 schräg geneigt ist. Die Schenkel 91 stützen sich axial mit ihren keilförmigen Außenflächen spindelseitig gegen besagte Keilfläche 671 des Lagerdeckels 67 ab, und getriebeseitig gegen die beiden Lagerschalen 8.

Zur Einstellung der Vorspannkraft kann das Keilelement 9 relativ zum Getriebegehäuse 63 radial, vom Verbindungsteil 92 in Richtung der Schenkel 91 quer zur Achse G mit einer Einstellkraft F belastet werden, wie in den Figuren 7, 8 und 9 angedeutet. Hierzu kann, wie in Figur 9 gezeigt, eine Einstellschraube 93 in das Getriebegehäuse 63 eingeschraubt werden, wodurch das Keilelement 9 radial, d.h. quer zur Achse G verschoben wird. Durch die Keilwirkung üben die Schenkel 91 eine axiale Vorspannung auf die Lagerschalen 8 aus. Diese übertragen die Vorspannung über die Lagernut 73 auf die Gewindespindel 7, wodurch die Lagerung in dem Getriebegehäuse 63 spielfrei verspannt werden kann.

Zwischen dem Getriebegehäuse 63 und dem Keilelement 9, bzw. zwischen der Einstellschraube 93 und dem Keilelement 9 kann, wie in Figur 9 gezeigt, ein Federelement 94 eingesetzt sein, beispielsweise eine Druckfeder. Diese bildet ein elastisches Spannelement, welches die auf die Lagerschalen 8 ausgeübte Vorspannung durch Federkraft F erzeugt und aufrecht erhält.

Zusätzlich kann zwischen dem Lagerdeckel 67 und dem Keilelement 9 ein Federelement angeordnet sein, wie beispielsweise eine Tellerfeder, Schraubenfeder, Wellfeder oder ein aus einem Elastomer gebildeten O-Ring.

Alternativ kann anstelle des Keilelements 9 zwischen dem Lagerdeckel 67 und den Lagerschalen ein Federelement zur Vorspannung der Lagerschalen 8 in Richtung der Achse G vorgesehen sein, wie beispielsweise eine Tellerfeder, Schraubenfeder, Wellfeder oder ein aus einem Elastomer gebildeter O-Ring.

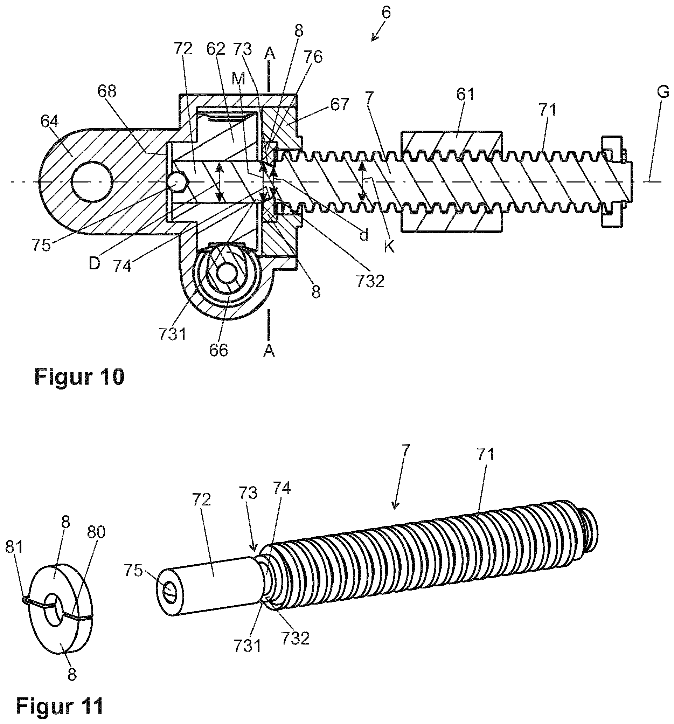

In der Figur 10 ist einen Längsschnitt entlang der Spindelachse (G) durch einen Verstellantrieb in einer vierten Ausführungsform ähnlich Figur 3 gezeigt. Dabei sind lediglich die Lagernut 73 und die Lagerschalen 8 abweichend zur Figur 3 ausgebildet.

Zwischen dem Gewindeabschnitt 71 und dem Schaftabschnitt 72 weist die Gewindespindel 7 eine Lagernut 73 auf, an deren Nutgrund ein konischer Lagerabschnitt 74 mit einem minimalen Lagerdurchmesser d und einem maximalen Lagerdurchmesser M ausgebildet ist. Dabei ist der minimale Lagerdurchmesser d bevorzugt an der dem Gewindeabschnitt 71 zugewandten Flanke 732 ausgebildet. Mit anderen Worten läuft die Lagernut 73 in Richtung auf den Gewindeabschnitt 71 zu zusammen, bevorzugt kegelförmig zusammen, sprich der Nutgrund verjüngt sich in Richtung auf den Gewindeabschnitt 71 zu. Somit weist der Nutgrund der Lagernut 73 bevorzugt eine Kegelmantelfläche auf, die zumindest abschnittsweise als Lagerfläche fungiert.

Der minimale Lagerdurchmesser d ist bevorzugt kleiner als der Schaftdurchmesser D des Schaftabschnitts 72, und der bevorzugt ebenfalls kleiner ist als der Kerndurchmesser K des Gewindeabschnitts 71, so dass der minimale Lagerdurchmesser d ebenfalls kleiner als der Gewindenenndurchmesser ist.

Der maximale Lagerdurchmesser D ist bevorzugt kleiner gleich dem Schaftdurchmesser D des Schaftabschnitts 72, und der bevorzugt ebenfalls kleiner gleich dem Kerndurchmesser K des Gewindeabschnitts 71, so dass der maximale Lagerdurchmesser M ebenfalls kleiner als der Gewindenenndurchmesser ist.

Der Lagerabschnitt 74 ist in einer Lagerbohrung, auch als Lageröffnung oder Lagerausnehmung bezeichnet werden kann, in einer quer geteilten Lagerplatte oder -wand, die durch zwei jeweils als Halbschalen ausgebildete Lagerschalen 8 gebildet wird, bezüglich Drehung um die Achse G gleitend gelagert. Die Lagerbohrung der Lagerschalen 8 ist entsprechend dem Nutgrund ebenfalls korrespondierend konisch ausgebildet.

Die Lagerschalen 8 ragen radial in die Lagernut 73. Die axiale Dicke der Lagerschalen 8 ist um ein vorgegebenes axiales Spiel kleiner als die Breite der Lagernut 73, gemessen in axialer Richtung innen zwischen deren inneren Nutflanken 731 und 732.

Dank dieser Weiterbildung kann die axiale Vorspannung der Gewindespindel im Gehäuse 63 weiter verbessert werden. Weiterhin der konische Lagerabschnitt 74 der Nut mit einem Keilelement 9 wie in den Ausführungen der Figuren 7 bis 9 kombiniert werden. Dadurch kann eine weitere Verbesserung bzw. Erhöhung der axialen Vorspannkraft erreicht werden.

Figur 11 zeigt eine Detailansicht der Gewindespindel 7 und der Lagerplatten 8 in einer perspektivischen Ansicht ähnlich der Ausführung gemäß Figur 6, wobei die Lagerplatten 8 in einer alternativen Ausführungsform ausgebildet sind. Dabei sind die Lagerplatten 8, die durch einen Spalt 80 getrennt sind, über einen Koppelabschnitt 81 miteinander verbunden, wobei dieser Koppelabschitt 81 elastisch ausgebildet ist, so dass die Lagerplatten 8 zur Montage in der Lagernut 73 auseinander bewegt werden können. Bevorzugt ist der Koppelabschnitt 81 als Filmscharnier ausgebildet. Die Lagerplatten 8 und der Koppelabschnitt 81 sind bevorzugt als ein einstückiges integrales Bauteil ausgebildet, besonders bevorzugt als Kunststoffspritzgussteil.

Die Verbindung der Lagerplatten 8 mittels des Koppelabschnitts 81 kann ohne konstruktive bzw. strukturelle Anpassung auch in den Anordnungen der anderen Ausführungsformen erfolgen, da dies unabhängig von der Vorspannvorrichtung der Lagerplatten 8, wie beispielsweise der Verwendung des Keilelements 9 ist.

### Bezugszeichenliste

- 1: Lenksäule
- 2: Trageinheit
- 21: Befestigungsmittel
- 22, 23: Schwenklager
- 24: Lager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 5,6: Verstellantrieb
- 61: Spindelmutter
- 62: Getrieberad
- 63: Getriebegehäuse
- 64: Befestigungsmittel
- 65: Motor
- 66: Schnecke
- 67: Lagerdeckel
- 671: Keilfläche
- 7: Gewindespindel
- 71: Gewindeabschnitt
- 72: Schaftabschnitt
- 73: Lagernut
- 731: Nutflanke
- 732: Nutflanke
- 74: Lagerabschnitt
- 75: Lagerkugel
- 76: Öffnung
- 8: Lagerschalen
- 9: Keilelement
- 91: Schenkel
- 92: Verbindungsteil
- 93: Stellschraube
- 94: Federelement
- L: Längsachse
- H: Höhenrichtung
- F: Einstellkraft
- G: Achse (Gewindespindelachse)

## Patentansprüche

1. Verstellantrieb (6) für eine Lenksäule (1) eines Kraftfahrzeugs, mit einer Antriebseinheit umfassend eine Gewindespindel (7), die mit einem Lagerabschnitt (74) um ihre Achse (G) drehbar in einem Getriebegehäuse (63) gelagert ist, und die einen Gewindeabschnitt (71) mit einem Spindelgewinde aufweist, an den sich axial ein Schaftabschnitt (72) anschließt, auf dem ein Getrieberad (62) drehfest angeordnet ist, welches mit einem Antriebsrad (66) kämmt, das mit einem Motor (65) drehend antreibbar gekuppelt ist,
**dadurch gekennzeichnet,**
**dass** der Schaftabschnitt (72) zwischen dem Gewindeabschnitt (71) und dem Getrieberad (62) eine umlaufende Lagernut (73) mit einem sich zwischen ihren Nutflanken erstreckenden Nutgrund aufweist, wobei die Lagernut (73) in dem Schaftabschnitt (72) zwischen dem Gewindeabschnitt (71) und dem Getrieberad (62) eingebracht ist und die Nutbreite in axialer Richtung zwischen den Nutflanken (731, 732) gemessen kleiner ist als der axiale Abstand zwischen dem Gewindeabschnitt (71) und dem Getrieberad (62), wobei in der Lagernut (73) im Bereich des Nutgrunds der Lagerabschnitt (74) ausgebildet ist, der in einer Lageröffnung einer in die Lagernut (73) radial eingreifenden Lagerplatte (8) gleitend gelagert ist.

2. Verstellantrieb nach Anspruch 1, **dadurch gekennzeichnet, dass** der Lagerdurchmesser (d) des Lagerabschnitts (74) kleiner als der Gewindenenndurchmesser des Spindelgewindes ist.

3. Verstellantrieb nach einem der vorangehenden Ansprüche, **dadurch gekennzeichnet, dass** die Lagerplatte (8) durch die Lageröffnung geteilt ist.

4. Verstellantrieb nach einem der vorangehenden Ansprüche, **dadurch gekennzeichnet, dass** die axiale Dicke der Lagerplatte (8) im Bereich der Lageröffnung der Nutbreite der Lagernut (73) zwischen den Nutflanken (731, 732) abzüglich eines vorgegebenen axialen Lagerspiels entspricht.

5. Verstellantrieb nach einem der vorangehenden Ansprüche, **dadurch gekennzeichnet, dass** eine Vorspannvorrichtung (67, 9, 93, 94) wirkmäßig zwischen der Lagerplatte (8) und dem Getriebegehäuse (63) angeordnet ist, von der die Lagerplatte (8) gegen eine Nutflanke der Lagernut (73) axial vorspannbar ist.

6. Verstellantrieb nach Anspruch 5, **dadurch gekennzeichnet, dass** die Lagerplatte (8) in dem Getriebegehäuse (63) axial schwimmend gelagert ist.

7. Verstellantrieb nach Anspruch 5 oder 6, **dadurch gekennzeichnet, dass** die Vorspannvorrichtung ein elastisches Spannelement (94) aufweist.

8. Verstellantrieb nach einem der Ansprüche 5 bis 7, **dadurch gekennzeichnet, dass** die Vorspannvorrichtung ein quer zur Achse (G) keilförmig zusammenlaufendes Keilelement (9) aufweist, welches in einer Radialrichtung zwischen die Lagerplatte (8) und einer gegen die Achse (G) geneigten Stützfläche (671) des Getriebegehäuses (63) einbringbar ist.

9. Verstellantrieb nach Anspruch 8, **dadurch gekennzeichnet, dass** das Keilelement (9) U-förmig ausgebildet ist und zwei Schenkel (91) aufweist, welche die Gewindespindel (7) umgreifen.

10. Verstellantrieb nach einem der vorangehenden Ansprüche 5 bis 9, **dadurch gekennzeichnet, dass** die Vorspannvorrichtung zwischen dem Gewindeabschnitt (71) und dem Getrieberad (62) angeordnet ist.

11. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (6), der mit der Trageinheit (2) und mit der Stelleinheit (3) verbunden ist, und von dem die Stelleinheit (3) relativ zur Trageinheit (2) verstellbar ist, wobei der Verstellantrieb (6) eine Antriebseinheit aufweist, umfassend eine Gewindespindel (7), die mit einem Lagerabschnitt (74) um ihre Achse (G) drehbar in einem Getriebegehäuse (63) gelagert ist, und die einen in eine Spindelmutter (61) eingreifenden Gewindeabschnitt (71) mit einem Spindelgewinde aufweist, an den sich axial ein Schaftabschnitt (72) anschließt, auf dem ein Getrieberad (62) drehfest angeordnet ist, welches mit einem Antriebsrad (66) kämmt, das mit einem Antriebsmotor (65) drehend antreibbar gekuppelt ist,
**dadurch gekennzeichnet,**
**dass** der Verstellantrieb (6) ausgebildet ist gemäß zumindest einem der Ansprüche 1 bis 10.

## Claims

1. An adjustment drive (6) for a steering column (1) of a motor vehicle, having a drive unit comprising a threaded spindle (7) which is supported in a gearbox housing (63) with a bearing portion (74) so as to be able to be rotated about the axis (G) thereof and which has a threaded portion (71) having a spindle thread which is axially adjoined by a shaft portion (72), on which there is arranged in a rotationally secure manner a gear wheel (62) which meshes with a drive wheel (66) which is coupled to a motor (65) so as to be able to be driven in rotation,
**characterized in that**
the shaft portion (72) has between the threaded portion (71) and the gear wheel (62) a peripheral bearing groove (73) with a groove base which extends between the groove flanks thereof, wherein the bearing groove (73) is introduced in the shaft portion (72) between the threaded portion (71) and the gear wheel (62) and the groove width measured in an axial direction between the groove flanks (731, 732) is smaller than the axial spacing between the threaded portion (71) and the gear wheel (62), wherein in the bearing groove (73) in the region of the groove base there is constructed the bearing portion (74) which is supported in a sliding manner in a bearing opening of a bearing plate (8) which engages radially in the bearing groove (73).

2. The adjustment drive as claimed in claim 1, **characterized in that** the bearing diameter (d) of the bearing portion (74) is less than the thread nominal diameter of the spindle thread.

3. The adjustment drive as claimed in either of the preceding claims, **characterized in that** the bearing plate (8) is divided by the bearing opening.

4. The adjustment drive as claimed in one of the preceding claims, **characterized in that** the axial thickness of the bearing plate (8) in the region of the bearing opening corresponds to the groove width of the bearing groove (73) between the groove flanks (731, 732) minus a predetermined axial bearing play.

5. The adjustment drive as claimed in one of the preceding claims, **characterized in that** a pretensioning device (67, 9, 93, 94) is actively arranged between the bearing plate (8) and the gearbox housing (63), by which pretensioning device the bearing plate (8) can be axially pretensioned against a groove flank of the bearing groove (73).

6. The adjustment drive as claimed in claim 5, **characterized in that** the bearing plate (8) is supported in the gearbox housing (63) in an axially floating manner.

7. The adjustment drive as claimed in claim 5 or 6, **characterized in that** the pretensioning device has a resilient clamping element (94).

8. The adjustment drive as claimed in one of claims 5 to 7, **characterized in that** the pretensioning device has a wedge element (9) which converges in a wedge-like manner transversely relative to the axis (G) and which can be introduced in a radial direction between the bearing plate (8) and a support face (671) of the gearbox housing (63) which is inclined relative to the axis (G).

9. The adjustment drive as claimed in claim 8, **characterized in that** the wedge element (9) is constructed in a U-shaped manner and has two members (91) which engage around the threaded spindle (7).

10. The adjustment drive as claimed in one of the preceding claims 5 to 9, **characterized in that** the pretensioning device is arranged between the threaded portion (71) and the gear wheel (62).

11. A steering column (1) which can be adjusted in a motorized manner for a motor vehicle, having a support unit (2) which can be fitted to a vehicle body and by means of which there is retained an adjustment unit (3) in which a steering spindle (32) is rotatably supported about a longitudinal axis (L), and having an adjustment drive (6) which is connected to the support unit (2) and to the adjustment unit (3), and by means of which the adjustment unit (3) can be adjusted relative to the support unit (2), wherein the adjustment drive (6) has a drive unit, comprising a threaded spindle (7) which is supported with a bearing portion (74) so as to be able to be rotated about the axis (G) thereof in a gearbox housing (63), and which has a threaded portion (71) which engages in a spindle groove (61) and which has a spindle thread which is axially adjoined by a shaft portion (72) on which there is arranged in a rotationally secure manner a gear wheel (62) which meshes with a drive wheel (66) which is coupled to a drive motor (65) so as to be able to be driven in rotation,
**characterized in that**
the adjustment drive (6) is constructed as claimed in at least one of claims 1 to 10.

## Revendications

1. Entraînement de réglage (6) destiné à une colonne de direction (1) d'un véhicule automobile, ledit entraînement de réglage comprenant une unité d'entraînement qui comprend une broche filetée (7) qui est montée dans un boîtier de transmission (63) de manière à pouvoir tourner sur son axe (G) avec une portion de palier (74) et qui comporte une portion filetée (71) pourvue d'un filetage de broche à laquelle est raccordée axialement une portion d'arbre (72) sur laquelle est disposée solidairement en rotation une roue de transmission (62) qui s'engrène avec une roue d'entraînement (66) qui peut être accouplée à un moteur (65) de manière à pouvoir être entraîné en rotation, **caractérisé en ce que**
la portion d'arbre (72) comporte entre la portion filetée (71) et la roue de transmission (62) une rainure de palier circonférentielle (73) pourvue d'un fond de rainure s'étendant entre ses flancs de rainure, la rainure de palier (73) étant ménagée dans la portion d'arbre (72) située entre la portion filetée (71) et la roue de transmission (62) et la largeur de rainure mesurée dans la direction axiale entre les flancs de rainure (731, 732) étant inférieure à la distance axiale entre la portion filetée (71) et la roue de transmission (62), la portion de palier (74) étant formée dans la rainure de palier (73) dans la région du fond de rainure et étant montée de manière coulissante dans une ouverture de palier d'une plaque de palier (8) s'engageant radialement dans la rainure de palier (73).

2. Entraînement de réglage selon la revendication 1, **caractérisé en ce que** le diamètre de palier (d) de la portion de palier (74) est inférieur au diamètre de filetage nominal du filetage de broche.

3. Entraînement de réglage selon l'une des revendications précédentes, **caractérisé en ce que** la plaque de palier (8) est divisée par l'ouverture de palier.

4. Entraînement de réglage selon l'une des revendications précédentes, **caractérisé en ce que** l'épaisseur axiale de la plaque de palier (8) dans la région de l'ouverture de palier correspond à la largeur de rainure de la rainure de palier (73) entre les flancs de rainure (731, 732) moins un jeu de roulement axial spécifié.

5. Entraînement de réglage selon l'une des revendications précédentes, **caractérisé en ce qu'**un dispositif de précontrainte (67, 9, 93, 94) est fonctionnellement disposé entre la plaque de palier (8) et le boîtier de transmission (63) et permet de précontraindre la plaque de palier (8) axialement contre un flanc de rainure de la rainure de palier (73).

6. Entraînement de réglage selon la revendication 5, **caractérisé en ce que** la plaque de palier (8) est montée de manière flottante axialement dans le boîtier de transmission (63).

7. Entraînement de réglage selon la revendication 5 ou 6, **caractérisé en ce que** le dispositif de précontrainte comporte un élément tendeur élastique (94).

8. Entraînement de réglage selon l'une des revendications 5 à 7, **caractérisé en ce que** le dispositif de précontrainte comporte un élément formant coin (9) qui converge en forme de coin transversalement à l'axe (G) et qui peut être introduit dans une direction radiale entre la plaque de palier (8) et une surface d'appui (671), inclinée vers l'axe (G), du boîtier de transmission (63).

9. Entraînement de réglage selon la revendication 8, **caractérisé en ce que** l'élément formant coin (9) est en forme de U et comporte deux branches (91) qui s'engagent autour de la broche filetée (7).

10. Entraînement de réglage selon l'une des revendications précédentes 5 à 9, **caractérisé en ce que** le dispositif de précontrainte est disposé entre la portion filetée (71) et la roue de transmission (62).

11. Colonne de direction motorisée (1) destinée à un véhicule automobile, ladite colonne de direction comprenant une unité de support (2), qui peut être fixée à une carrosserie de véhicule et qui maintient une unité de réglage (3) dans laquelle une broche de direction (32) est montée de manière à pouvoir tourner sur un axe longitudinal (L), et un entraînement de réglage (6) qui est relié à l'unité de support (2) et à l'unité de réglage (3) et qui permet de régler l'unité de réglage (3) par rapport à l'unité de support (2), l'entraînement de réglage (6) comportant une unité d'entraînement qui comprend une broche filetée (7) qui est montée dans un boîtier d'engrenage (63) de manière à pouvoir tourner sur son axe (G) avec une portion de palier (74) et qui comporte une portion filetée (71), pourvue d'un filetage de broche, qui s'engage dans un écrou de broche (61) et à laquelle est raccordée axialement une portion d'arbre (72) sur laquelle est disposée solidairement en rotation une roue de transmission (62) qui s'engrène avec une roue d'entraînement (66) qui est accouplée à un moteur d'entraînement (65) de manière à pouvoir être entraînée en rotation,
**caractérisée en ce que**
l'entraînement de réglage (6) est conçu selon l'une au moins des revendications 1 à 10.
